# EUROPEAN PATENT APPLICATION

(11) **EP 2 036 864 A1**
(43) Date of publication of application: **18.03.2009**
(21) Application number: 07738347.9
(22) Date of filing: 13.03.2007
(51) Int. Cl.: C02F 1/48, C02F 1/32, C02F 1/34, C02F 1/72, C02F 1/74

(54) **WATER TREATMENT APPARATUS**

(30) Priority: 31.05.2006 JP 2006151538
(71) Applicant: Kabushiki Kaisha Yaskawa Denki, Kitakyushu-shi, Fukuoka 806-0004 (JP)
(72) Inventor: IKE, Hideaki c/o Kabushiki Kaisha Yaskawa Denki, Kitakyushu-shi, Fukoka 806-004 (JP); HAKIAI,Kazunori c/o Kabushiki Kaisha Yaskawa Denki, Kitakyushu-shi, Fukoka 806-004 (JP)
(74) Representative: Grünecker, Kinkeldey, Stockmair & Schwanhäusser Anwaltssozietät
(86) International application number: PCT/JP2007/054875
(87) International publication number: WO 2007/138773

(57) **Abstract**

There is provided a compact, low-cost and highly reliable water treatment apparatus which does not require equipment for supplying air or oxygen gas, and has a high water treating effect due to synergy of chemical and physical actions.

The water treatment apparatus according to the present invention treats water by applying high voltage to electrodes (5) disposed inside a water conduit (13) for water-to-be-treated (6), and is configured to include a cavitation bubble generating nozzle (12) disposed near an upstream side of the electrodes (5) and having an orifice arranged inside the water conduit (13) to cause bubbles inside the water-to-be-treated (6) due to a cavitation on a downstream side of the most contracted portion thereof, and a pressurization pump (11) disposed on the upstream side of the cavitation bubble generating nozzle (12) to feed the water-to-be-treated (6) with a given pressure.

## Description

### TECHNICAL FIELD

The present invention relates to a water treatment apparatus which is used to treat water containing organic matter, microbes, bacteria or ammonia in connection with tap water, sewage, industrial wastewater, garbage disposal facility leachate, livestock wastewater, industrial water or effluent, food processing water or effluent, semiconductor cleaning water or drainage thereof, pool water, ship ballast water or drainage thereof, polluted water in rivers and lakes, or the like.

### BACKGROUND ART

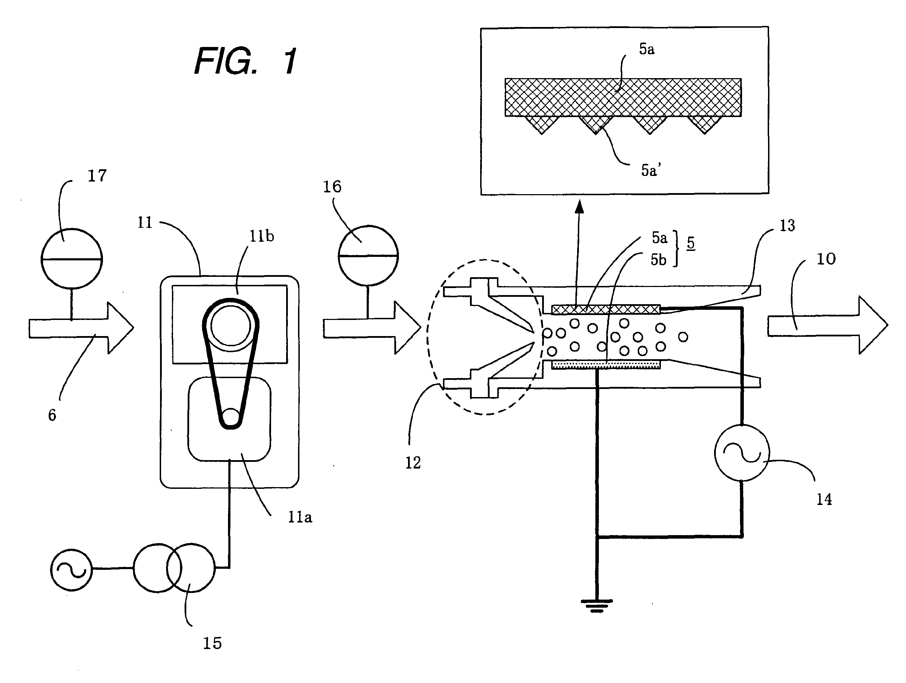

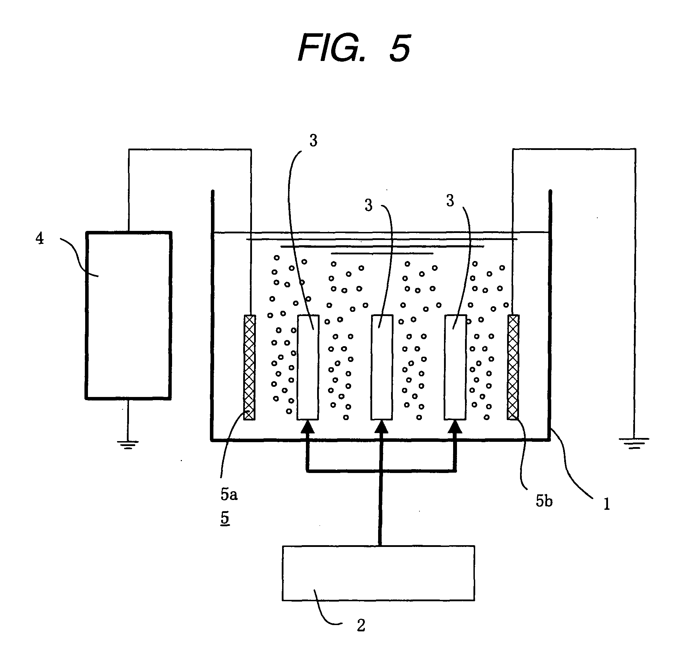

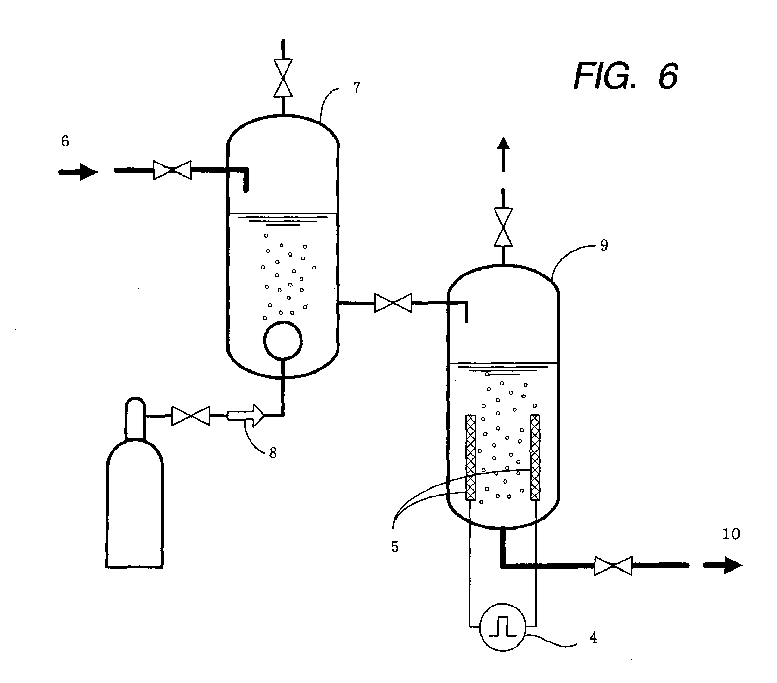

In recent years, a treatment method of purifying water using active species, such as ozone and hydroxy radicals generated by discharge or the like, is becoming established in removing harmful or unpleasantness-causing organic matter and bacteria contained in service water or wastewater.
The active species such as ozone and hydroxy radicals have strong oxidizability to oxidize and decompose organic matter dissolved in water. Therefore, such active species are becoming widely adopted as means for reducing COD), decoloring, deodorizing, sterilizing and removing harmful persistent organic matter or the like in tap water and sewage as well as in various kinds of service water and wastewater such as industrial water and effluent, pool water, ship ballast water and drainage thereof.
In a general treating method using ozone, ozone gas is generated by providing air or high-concentration oxygen through a discharge space, and is dissolved into water by diffusing or the like to contact and react with substances to be removed. However, this method has some problems such as poor electric power efficiency, large-size apparatus, and high cost.
In order to address such problems, there is proposed a method in which aeration with air or oxygen is actively and efficiently carried out between electrodes placed in water to create fine bubbles, and discharge is generated in the bubbled space inside the water (see, e.g., Patent Document 1).
A water treatment apparatus therefore is illustrated in Fig. 5. In Fig. 5, 1 indicates a treatment vessel, 2 indicates gas supply means, 3 indicates a hollow fiber membranes, 4 indicates a high-voltage power supply, and 5 indicates electrodes. The hollow fiber membrane 3 and electrodes 5 are arranged inside the water. When a high voltage, which may be direct, alternating, or pulse voltage, is applied between the electrodes 5 which are opposingly disposed on respective sides of the hollow fiber membranes 3 having fine pores, a local pulse discharge is generated inside fine bubbles created by the fine pores of the hollow fiber membranes 3. As a result of this, oxygen existing inside the fine bubbles is brought into contact with the high-density pulse discharge thus generated, and is excited by electric energy, whereby ozone is generated and this ozone acts on organic substances to be removed.
Further, instead of carrying out active aeration between the electrodes as described above, there is also proposed another method in which fine bubbles having uniform size and serving as discharge cores are effectively generated inside the entire discharge space (see, e.g., Patent Document 2).
A water treatment apparatus therefore is illustrated in Fig. 6. In Fig. 6, 6 indicates water to be treated, 7 indicates a high-pressure vessel, 8 indicates oxygen-rich gas, 9 indicates a low-pressure vessel, and 10 indicates treated water. The reference numerals which have been previously described are omitted. The oxygen-rich gas 8 is dissolved in the water inside the high pressure vessel 7, and then, the dissolved oxygen-rich gas 8 is turned into fine bubbles in water between the electrodes 5 inside the depressurized low-pressure vessel 9. The fine bubbles are exposed under pulse discharge, thereby creating highly oxidizing water having high ozone and/or OH radical dissolution amount.
Patent Document 1: JP 5-319807 A
Patent Document 2: JP 2001-10808 A

### DISCLOSURE OF THE INVENTION

### PROBLEMS TO BE SOLVED BY THE INVENTION

However, both of the methods have the following problems in common.
In order to generate the fine bubbles for creating the discharge space, equipments for supplying air or oxygen gas and micronizing the bubbles are provided. In addition, it is obviously predictable that equipment for deaerating the water containing undissolved bubbles and equipment for treating discharged gas after the deaeration are also necessary. For such reasons, downsizing and cost reduction are extremely difficult.
Further, pressure inside the micronized bubbles is substantially equal to or higher than the atmospheric pressure. Therefore, sparkover voltage for forming the discharge space is high, which means that a high voltage needs to be applied. Accordingly, a power receiving system becomes large-sized.
It is also concerned that, because the methods are relying only on chemical actions of mainly the active species such as ozone and hydroxy radicals, effect is limited when suspended substances is mixed in the water to be treated.
The present invention has been made in view of the problems described above, and it is an object thereof to provide a compact and low-cost water treatment apparatus which can create a discharge space more easily and can cause chemical actions with active species such as ozone or hydroxy radicals as well as physical actions such as fragmentation.

### MEANS FOR SOLVING THE PROBLEMS

In order to solve the problems described above, the present invention is configured as follows.
According to the present invention, as described in claim 1, in a water treatment apparatus which treats water by applying high voltage between electrodes which are opposingly provided inside a water conduit for the water to be treated, a cavitation bubble generating nozzle, which causes cavitation bubbles to be generated in the water to be treated, is arranged near an upstream side of the electrodes, and a pressurization pump, which feeds the water to be treated with a given pressure, is arranged on an upstream side of the cavitation bubble generating nozzle.
According to the present invention, as described in claim 2, the electrodes include either a combination of two among a line-shaped electrode, a rod-shaped electrode and a flat plate electrode, the combination including a combination of electrodes having the same shape, or a combination of a line-shaped electrode or a rod-shaped electrode and a spiral-shaped electrode.
According to the present invention, as described in claim 3, the electrodes include an electrode arranged on a periphery of a distal end portion of the cavitation bubble generating nozzle, and an opposed electrode disposed inside the water conduit.
According to the present invention, as described in claim 4, protrusions are formed on a surface of the electrodes.
According to the present invention, as described in claim 5, a motor and a pump of the pressurization pump are arranged on an insulating base with a given insulation distance therebetween, and a rotation shaft of the motor and a rotation shaft of the pump are coupled through a V belt made of insulating material or through another insulating member.
According to the present invention, as described in claim 7, there is provided a pressure monitor device which, while the water is flowing, monitors a pressure on the upstream side of the cavitation bubble generating nozzle or a pressure difference between the upstream side and the downstream side of the cavitation bubble generating nozzle.
According to the present invention, as described in claim 8, there is provided a conductivity meter which monitors a conductivity of the water to be treated.
According to the present invention, as described in claim 9, there is provided hydrogen peroxide injecting means arranged on the upstream side or the downstream side of the cavitation bubble generating nozzle for injecting hydrogen peroxide.
According to the present invention, as described in claim 10, there is provided means for irradiating ultraviolet ray toward a region inside the water conduit where the electrodes are opposed to each other.
According to the present invention, as described in claim 11, there is provided dissolved oxygen enriching means arranged on the upstream side of the pressurization pump or on the upstream side of the cavitation bubble generating nozzle for enriching dissolved oxygen in the water.

### EFFECTS OF THE INVENTION

According to the present invention, as described in claim 1, right after passing through the most contracted portion of an orifice, numerous small cavitation bubbles are generated in the fed water due to a sudden drop of the pressure. Therefore, equipment for supplying air or oxygen gas or equipment for micronizing the bubbles is not required. Further, the bubbles naturally disappear in a short time so that there will be no residual bubbles in the water to be treated. Therefore, equipment for deaeration or equipment for treating exhaust gas is also not required. Accordingly, it is possible to provide a compact apparatus with low cost. Further, since the fine cavitation bubbles are generated under the atmospheric pressure or below, sparkover voltage is low. Therefore, the scale of power receiving equipment can be reduced, and reliability of the apparatus can be enhanced. In addition, synergetic effect with physical actions can be highly expected with the apparatus, e.g., an action of an impactive force generated upon collapse of the cavitation bubbles.
According to the present invention, as described in claim 2, the configuration and combination of the electrodes can be optimized in accordance with quality or quantity of the water to be treated. Therefore, it is possible to form a stable discharge space, thereby enhancing treatment efficiency.
According to the present invention, as described in claim 3, since the electrodes are arranged in a region right after where the water to be treated passes through the most contracted portion of the orifice, the pressure is reduced the most inside the water conduit, and the generation of the cavitation bubbles is facilitated. Therefore, discharge is generated with a lower sparkover voltage. Further, since the conduit resistance when the water to be treated passes through between the electrodes can be reduced, it becomes possible to increase flow rate while reducing feeding pressure of the water to be treated, thereby improving treating efficiency.
According to the present invention, as described in claim 4, the protrusion configuration on the surface of the electrodes facilitates the formation of discharge, whereby the treating efficiency is improved.
According to the present invention, as described in claim 5, in case where the potential difference of the pump of the pressurization pump is turned into high voltage through the water to be treated upon application of high voltage to the electrodes, the motor can be prevented from being grounded through low voltage power supply system, thereby being able to prevent damage of the apparatus and electric shock to a human body.
According to the present invention, as described in claim 6, in case where the potential differences of the pump and the motor of the pressurization pump are turned into high voltage through the water to be treated upon application of high voltage to the electrodes, grounding through the low voltage power supply system can be prevented, thereby being able to prevent damage of the apparatus and electric shock to a human body.
According to the present invention, as described in claim 7, the generation of the cavitation bubbles can be stabilized, and when there is an abnormality in the water flow state, a change in the pressure is detected to immediately stop the application of the high voltage or the apparatus per se. This makes it possible to provide a highly reliable apparatus which can carry out safe and stable treatment.
According to the present invention, as described in claim 8, it is possible to prevent in advance the stable generation of discharge and the treatment from being inoperable due to an increase in the conductivity of the water to be treated which results from a change in the quality of the water or the like. This makes it possible to provide a highly reliable apparatus which can carry out safe and stable treatment.
According to the present invention, as described in claim 9, the hydrogen peroxide and the discharge generates ozone, which facilitate the generation of active species such as hydroxy radicals, thereby enhancing decomposing effect to persistent organic matter.
According to the present invention, as described in claim 10, the ultraviolet ray and the discharge generates ozone, which facilitate the generation of active species such as hydroxy radicals, thereby enhancing decomposing effect to persistent organic matter.
According to the present invention, as described in claim 11, the generation of active species such as high-concentration ozone and hydroxy radicals can be facilitated by the discharge, whereby further improvement of the treating efficiency can be expected.

### BRIEF DESCRIPTION OF THE DRAWINGS

Fig. 1 illustrates a first embodiment of the present invention, and is a schematic configuration diagram of a water treatment apparatus.
Fig. 2 illustrates a second embodiment of the present invention, and is a sectional view of a portion including electrodes.
Fig. 3 illustrates the second embodiment of the present invention, and is a sectional view of a portion including another type of electrodes.
Fig. 4 illustrates a third embodiment of the present invention, and is a schematic configuration diagram of a water treatment apparatus.
Fig. 5 is a schematic structure view of a conventional water treatment apparatus.
Fig. 6 is a schematic structure view of another conventional water treatment apparatus. EXPLANATION OF REFERENCE NUMERALS

- 1: Treatment Vessel
- 2: Gas Supply Means
- 3: Hollow Fiber Membrane
- 4: High-Voltage Power Supply
- 5, 5a, 5b: Electrodes
- 5a': Protrusion
- 6: Water To Be Treated
- 7: High-Pressure Vessel
- 8: Oxygen-Rich Gas
- 9: Low-Pressure Vessel
- 10: Treated Water
- 11: Pressurization Pump
- 11a: Motor
- 11b: Pump
- 12: Cavitation Generating Nozzle
- 13: Water Conduit

- 14: High-Voltage Power Supply
- 15: High-Voltage Insulating Transformer
- 16: Pressure Monitor Device
- 17: Conductivity Meter
- 18: Hydrogen Peroxide Injecting Means
- 19: Dissolved Oxygen Enriching Means
- 20: Ultraviolet Irradiating Means

### BEST MODE FOR CARRYING OUT THE INVENTION

Hereinafter, embodiments of the present invention will be described with reference to the drawings.

### FIRST EMBODIMENT

Fig. 1 illustrates a first embodiment of the present invention, and is a schematic configuration diagram of a water treatment apparatus. In Fig. 1, 11 indicates a pressurization pump, 12 indicates a cavitation generating nozzle, 13 indicates a water conduit, 14 indicates a high-voltage power supply, 15 indicates a high-voltage insulating transformer, 16 indicates a pressure monitor device, and 17 indicates a conductivity meter. The reference numerals which have been previously described and the description thereof are omitted.
A primary portion of the present invention that differs from Patent Document 1 and Patent Document 2 is in that the pressurization pump 11 which feeds the water to be treated with a given pressure and the cavitation bubble generating nozzle 12 are arranged, and in that electrodes, which are opposed to each other inside the water conduit with a certain space therebetween, are provided in the vicinity of a downstream side of the cavitation bubble generating nozzle. An equipment for supplying air or oxygen gas or an equipment for micronizing the supplied gas into fine bubbles, as those in Patent Document 1 and Patent Document 2, are not provided. An equipment for deaerating the water containing undissolved bubbles or an equipment for treating discharged gas after the deaeration are also not provided. Further, it does not rely only on chemical actions which are mainly caused by active species such as ozone and hydroxy radicals, but also in synergetic effect with physical actions which is caused by impactive force generated upon collapse of the bubbles, treatment efficiency can be significantly enhanced.

Next, operations in the embodiment will be described.
(1) The water-to-be-treated 6 is fed by the pressurization pump 11 with a given pressure to the cavitation generating nozzle 12 which is disposed in the middle portion of the conduit. The cavitation generating nozzle 12 has an orifice shape, and right after passing through the most contracted portion, there is a rapid pressure fall in this downstream area. In an area where the pressure falls below the saturation vapor pressure of liquid, numerous small cavitation bubbles are generated due to boiling phenomenon.
   The pressure of the water fed by the pressurization pump 11 is preferably set almost within a range of 0.1 - 1.5 MPa, although it depends on quality of the water to be treated.
(2) In the vicinity of the downstream side of the cavitation generating nozzle 12, the electrodes 5, respectively made of stainless steel and having a flat plate structure, are arranged inside the water conduit 13 so as to be opposed to each other with a certain distance therebetween. A discharge surface of the anode side (a high voltage side) of the electrodes is configured to have protrusions 5a' as shown in the drawing, whereby sparkover voltage can be lowered and a stabilized discharge space can be formed. When the cavitation bubbles pass through this space, high voltage of a high-frequency having sine waveform, pulse waveform or rectangular waveform is applied from the high-voltage power supply 14, whereby vapor and oxygen contained in the cavitation bubbles are excited due to high-density electric energy and active species such as hydroxyl radicals and ozone are generated. These active species are promptly dissolved into the water to be treated, and effectively react with the organic substances to be treated to decompose them. At the same time, sterilization with respect to microbes and fungi can be carried out due to a strong electric field and ultraviolet rays which are created in the discharge space. The distance between the electrodes may preferably be 30mm or less. Although appropriate voltage to applied and frequency thereof depend on the distance between the electrodes, and quality, flow rate and pressure of the water to be treated, they may preferably be set within a range of 10kV or less and 10kHz or less respectively. Further, while the electrodes are made of stainless steel in the embodiment, material and configuration of the electrodes are not specifically limited. Fro example, surfaces of the electrode may be coated with inorganic insulating material or the like.
(3) The cavitation bubbles disappear in a region where the flow rate reduces and the pressure increases. Due to a rapid shrinkage of the bubbles, impactive force is generated within the bubbles. This impactive force can destroy floating substances, microbes or the like mixed in the water to be treated.
   When the phenomena (2) and (3) described above exist within the same space, owing to the synergetic effect thereof, the organic matter to be removed can be strongly and efficiently treated, whereby clean treated water 10 can be obtained.
   According to the above, equipment for supplying air or oxygen or equipment for micronizing the bubbles is not required. Further, since the cavitation bubbles disappear in a short time and no bubbles are left in the water to be treated, equipment for deaeration or for treating exhaust gas is also not required. Accordingly, it is possible to provide a compact apparatus with low cost. Furthermore, since the micronized cavitation bubbles are generated under the atmospheric pressure or below, the sparkover voltage is low. Therefore, the power receiving equipment can be downsized, and reliability of the apparatus is enhanced.
   In addition, in order to improve reliability and safety of the apparatus and to carry out a stable treatment, following configurations (4) to (6) are provided.
(4) The pressurization pump 11 is configured such that an motor 11a and a pump 11b are arranged on an insulating base and are spaced away from each other by a given insulation distance, and such that a rotation shaft of the motor 11a and a rotation shaft of the pump 11b are coupled to each other through a V belt made of insulating material or through another insulating member. Further, a power source for driving the pressurization pump 11 supplies power through a high-voltage insulating transformer 15. Accordingly, when electric potential difference of the pump 11b or the motor 11a of the pressurization pump 11 becomes high voltage through the water-to-be-treated 6 upon application of high voltage to the electrodes 5, grounding through a low voltage power supply system can be prevented, thereby preventing damage of the apparatus and an electric shock to a human body.
(5) A pressure monitoring device 16 is provided to monitor a pressure on the upstream side of the cavitation bubble generating nozzle 12 or a pressure difference between the upstream side and the downstream side of the nozzle 12. When there is an abnormality in water flowing state, the pressure monitoring device 16 detects a variation in the pressure to immediately stop the application of the high voltage or the operation of the apparatus.
(6) A conductivity meter 17 is provided to monitor a conductivity of the water-to-be-treated 6, and when the conductivity of the water 6 is increased due to a change in the quality of the water 6 or the like, the application of the high voltage or the operation of the apparatus is stopped. This makes it possible to prevent a stable discharge generation and treatment from being inoperable.

### SECOND EMBODIMENT

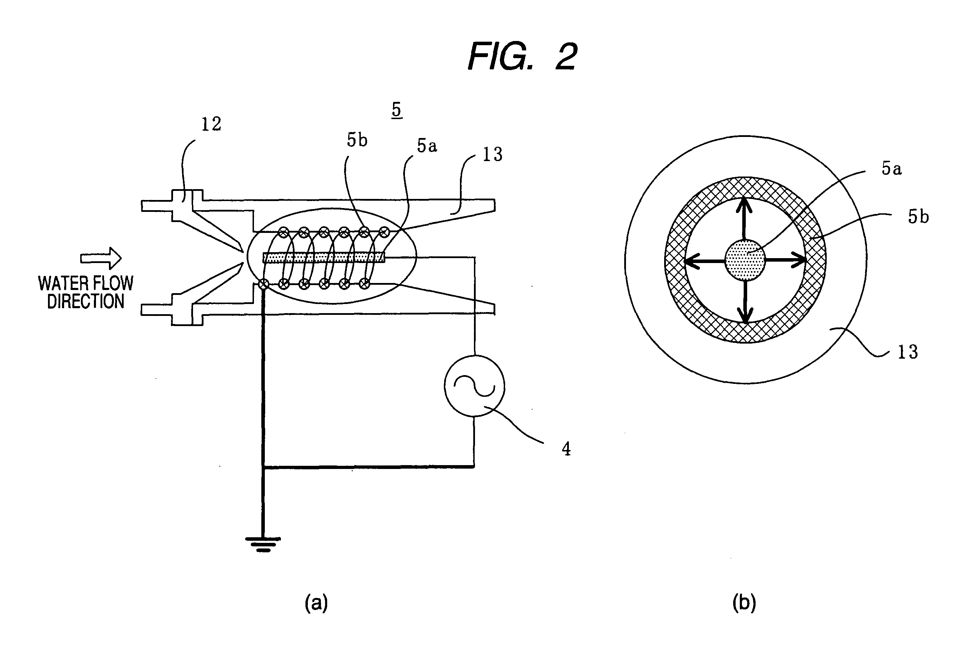

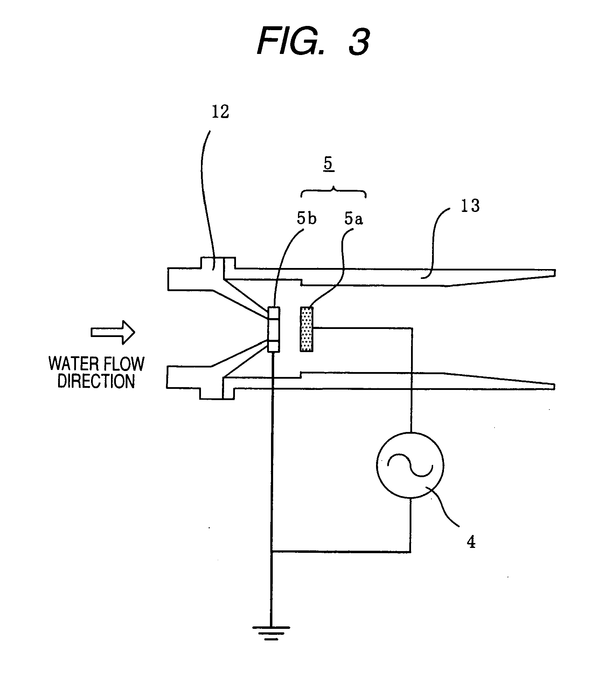

Figs. 2 and 3 illustrate a second embodiment of the present invention, and are sectional views of portions including electrodes. This embodiment illustrates examples of an arrangement of the electrodes 5. Fig. 2 illustrates an example in which a line-shaped or a rod-shaped electrode 5a (an anode side or a high voltage side) and an electrode 5b (a cathode side, a grounding side) of a spiral-shaped wire are disposed in a pair with constant distance therebetween. According to this arrangement of the electrodes 5, the electrodes 5 can easily be formed inside a conduit having a circular section, and a high water treatment effect can be obtained due to high discharge generating efficiency. While the cathode side (the grounding side) electrode 5b is formed in a spiral shape in this embodiment, the same effect can be obtained also when the electrode 5b has a meshed configuration.
Fig. 3 illustrates another example in which a ring-shaped electrode 5b (a cathode side or a grounding side) is attached to a distal end portion of the cavitation bubble generating nozzle 12 so as not to block the water flow passage, and a flat plate electrode 5a (an anode side or a high voltage side) is disposed inside the water conduit 13 so as to oppose to the electrode 5a with a certain distance therebetween. In a region where the electrodes are arranged is situated, the pressure is reduced the most inside the water conduit 13 because it is right after the water-to-be-treated 6 passes through the most contracted portion of the orifice, and the generation of cavitation bubbles is facilitated. Thus, the discharge can be generated with a lower sparkover voltage. Further, since it is possible to reduce a conduit resistance when the water to be treated passes through between the electrodes, the flow rate of the water-to-be-treated 6 can be increased while reducing feeding pressure thereof, whereby the treating efficiency is improved. The orifice portion of the cavitation bubble generating nozzle 12 may generally be made of insulating material such as ceramics or resin. However, it may also be made of metal material such as stainless steel to serve also as an electrode. While the electrode 5a is used as the anode side (the high voltage side) electrode and the electrode 5b is used as the cathode side (the grounding side) electrode, they may also be arranged reversely. THIRD EMBODIMENT

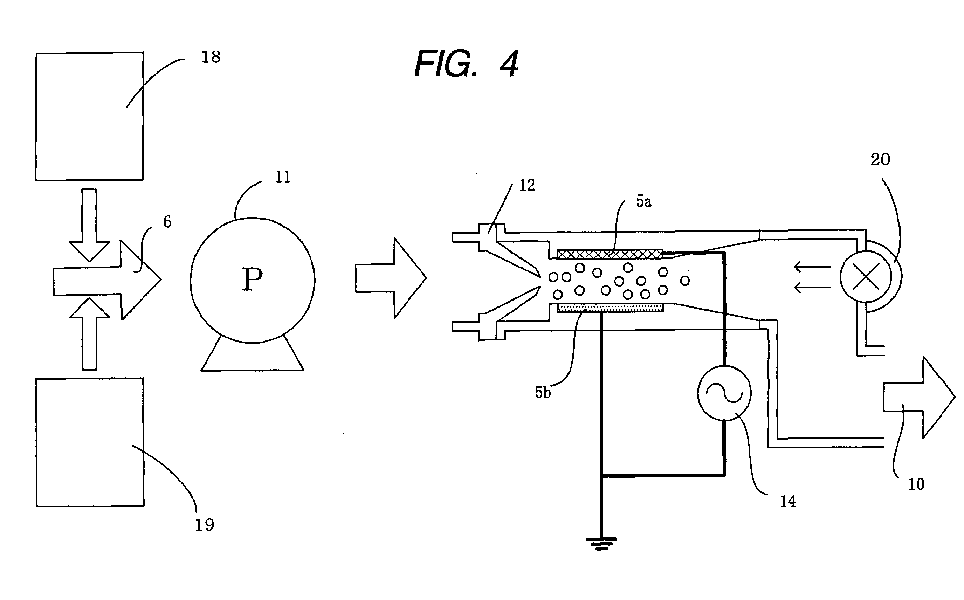

Fig. 4 illustrates a third embodiment of the present invention, and is a schematic configuration diagram of a water treatment apparatus. According to this embodiment, a radical generation facilitating function is added to the water treatment apparatus of the present invention as shown in the schematic configuration diagram. In Fig. 4, 18 indicates hydrogen peroxide injecting means, 19 indicates dissolved oxygen enriching means, and 20 indicates ultraviolet irradiating means. The remaining configurations are substantially the same as those of the first embodiment.
The hydrogen peroxide injecting means 18 injects a suitable amount of hydrogen peroxide from the upstream side or the downstream side of the pressurization pump 11. The ultraviolet irradiating means 20 irradiates ultraviolet rays of a short wavelength of 300nm or below directly toward the discharge space between the electrodes 5. The dissolved oxygen enriching means 19 is provided to increase dissolved oxygen level of the water to be treated in a storage vessel or the like (not shown) disposed on the upstream side of the pressurization pump 11, by means of aeration with high-concentration oxygen or the like. According to this configuration, the generation of active species such as ozone or hydroxyl radicals is facilitated, thereby enabling further improvement in decomposing effect of persistent organic matter or the like and the treating efficiency.
As described above, it is possible to eliminate the use of equipment for supplying air or oxygen, equipment for micronizing the bubbles as well as equipments for deaeration and treating exhaust gas. Further, since the micronized cavitation bubbles are generated under the atmospheric pressure or below, the aparkover voltage is low, whereby the reliability of the apparatus becomes high. Furthermore, a synergetic effect with physical actions, e.g., action of impactive force generated upon collapse of the cavitation bubbles, can be greatly expected. Furthermore, the generation of active species such as ozone or hydroxyl radicals is facilitated, and the decomposing effect of persistent organic matter or the like is improved. Accordingly, it is possible to provide a compact and highly reliable water treatment apparatus with low cost. INDUSTRIAL APPLICABILITY

The water treatment apparatus according to the present invention provides an excellent potential effect in inactivating microbes and bacteria. Specifically, it is also effective against ozone-resistant microbes such as cryptosporidium, with respect to which a strong effect could not have been expected only with a chemical treatment using ozone or the like, and also in sterilizing ballast water which is recently being raised as a problem.
Further, the present invention is not limited to water treatment, and is applicable in a wide range of fields, e.g., decomposition of PCB and a treatment for making chemicals harmless, with respect to various kinds of liquids in which cavitation bubbles can be generated by lowering pressure of the liquid to be treated to be a saturation vapor pressure thereof or below on the downstream side of the cavitation bubble generating nozzle.

## Claims

1. A water treatment apparatus which treats water by applying high voltage between electrodes which are opposingly provided inside a water conduit for the water to be treated, **characterized in that**
a cavitation bubble generating nozzle, which causes cavitation bubbles to be generated in the water to be treated, is arranged near an upstream side of the electrodes, and
a pressurization pump, which feeds the water to be treated with a given pressure, is arranged on an upstream side of the cavitation bubble generating nozzle.

2. The water treatment apparatus according to claim 1, wherein the electrodes comprise either:
a combination of two among a line-shaped electrode, a rod-shaped electrode and a flat plate electrode, the combination including a combination of electrodes having the same shape, or
a combination of a line-shaped electrode or a rod-shaped electrode and a spiral-shaped electrode.

3. The water treatment apparatus according to claim 1, wherein the electrodes comprise:
an electrode arranged on a periphery of a distal end portion of the cavitation bubble generating nozzle; and
an opposed electrode disposed inside the water conduit.

4. The water treatment apparatus according to claim 3, wherein protrusions are formed on a surface of the electrodes.

5. The water treatment apparatus according to claim 1, wherein a motor and a pump of the pressurization pump are arranged on an insulating base with a given insulation distance therebetween, and a rotation shaft of the motor and a rotation shaft of the pump are coupled through a V belt made of insulating material or through another insulating member.

6. The water treatment apparatus according to claim 1, wherein a power source for driving the pressurization pump supplies power through a high-voltage insulating transformer.

7. The water treatment apparatus according to claim 1, further comprising a pressure monitor device which, while the water is flowing, monitors a pressure on the upstream side of the cavitation bubble generating nozzle or a pressure difference between the upstream side and a downstream side of the cavitation bubble generating nozzle.

8. The water treatment apparatus according to 1, further comprising a conductivity meter which monitors a conductivity of the water to be treated.

9. The water treatment apparatus according to claim 1, further comprising hydrogen peroxide injecting means arranged on the upstream side or the downstream side of the cavitation bubble generating nozzle for injecting hydrogen peroxide.

10. The water treatment apparatus according to claim 1, further comprising means for irradiating ultraviolet ray toward a region inside the water conduit where the electrodes are opposed to each other.

11. The water treatment apparatus according to claim 1, further comprising dissolved oxygen enriching means arranged on the upstream side of the pressurization pump or on the upstream side of the cavitation bubble generating nozzle for enriching dissolved oxygen in the water.
